(19) **Europäisches Patentamt**

**European Patent Office**

**Office européen des brevets**

(11) **EP 1 433 749 B1**

(12) **EUROPÄISCHE PATENTSCHRIFT**

(45) Veröffentlichungstag und Bekanntmachung des Hinweises auf die Patenterteilung:
**05.04.2006 Patentblatt 2006/14**

(51) Int Cl.:
*C01B 33/18* (2006.01)  *C09C 1/30* (2006.01)
*C09C 3/12* (2006.01)  *C08K 3/20* (2006.01)
*C08K 9/06* (2006.01)

(21) Anmeldenummer: **03029219.7**

(22) Anmeldetag: **18.12.2003**

(54) **Wasserbenetzbare silylierte Metalloxide**

Wettable silylated metal oxides

Oxydes métalliques silylées et mouillables à l'eau

(84) Benannte Vertragsstaaten:
**BE DE FR GB**

(30) Priorität: **20.12.2002 DE 10260323**

(43) Veröffentlichungstag der Anmeldung:
**30.06.2004 Patentblatt 2004/27**

(73) Patentinhaber: **Wacker Chemie AG**
**81737 München (DE)**

(72) Erfinder:
• **Gottschalk-Gaudig, Torsten, Dr.**
**84489 Burghausen (DE)**
• **Barthel, Herbert, Dr.**
**84547 Emmerting (DE)**
• **Binks, Bernard Paul, Dr.**
**Walkington, HU17 8XX (GB)**

• **Balard, Henri, Dr.**
**68440 Bruebach (FR)**

(74) Vertreter: **Gössmann, Christoph Tassilo et al**
**Wacker-Chemie GmbH,**
**Zentralbereich PML,**
**Hanns-Seidel-Platz 4**
**81737 München (DE)**

(56) Entgegenhaltungen:
**EP-A- 0 686 676**  **EP-A- 0 798 348**
**WO-A-01/12730**  **WO-A-02/16267**
**DE-A- 10 145 162**

Bemerkungen:
Die Akte enthält technische Angaben, die nach dem Eingang der Anmeldung eingereicht wurden und die nicht in dieser Patentschrift enthalten sind.

EP 1 433 749 B1

**Beschreibung**

Die Erfindung betrifft ein Verfahren zur Herstellung von teilhydrophobem Metalloxid.

Silylierte Kieselsäuren, wie z.B. in EP 0686 676 beschrieben, werden standardmäßig als rheologische Additive in nichtwäßrigen polaren Harzsystem eingesetzt.

In wasserbasierenden Harzen ist ihr Einsatz jedoch nachteilig, da sie sich aufgrund ihrer ausgeprägten Hydrophobie kaum in die wäßrige Phase einarbeiten lassen und durch ihre starke Neigung zur Ausgrenzung aus der Wasserphase zur Flockulation und Separation neigen.

Der Erfindung lag die Aufgabe zugrunde, einen oberflächenmodifizierten Feststoff bereitzustellen, der die Nachteile des Standes der Technik nicht aufweist.

Gegenstand der Erfindung ist ein Verfahren zur Herstellung von teilhydrophobem Metalloxid, dadurch gekennzeichnet, dass das Metalloxid mit

I) Organosilan der Formel

$$R^1_nSiX_{4-n}$$

wobei n = 1, 2 oder 3 bedeutet
oder Mischungen aus diesen Organosilanen,
wobei $R^1$ ein gesättigter oder einfach bzw. mehrfach ungesättigter, einwertiger, gegebenenfalls halogenierter, Kohlenwasserstoffrest mit 1 bis 24 C-Atomen ist und dabei gleich oder verschieden sein kann und X = Halogen, Stickstoffrest, $OR^2$, $OCOR^2$, $O(CH_2)_xOR^2$ , wobei $R^2$ Wasserstoff oder ein einwertiger Kohlenwasserstoffrest mit 1 bis 12 C-Atomen bedeutet und x = 1, 2, 3 bedeutet
oder

II) Organosiloxan aufgebaut aus Einheiten der Formel

$$(R^1_3SiO_{1/2}),$$

und/oder

$$(R^1_2SiO_{2/2}),$$

und/oder

$$(R^1SiO_{3/2})$$

wobei $R^1$ die obige Bedeutung hat, wobei
die Anzahl von diesen Einheiten in einem Organosiloxan mindestens 2 ist, und I und II allein oder in beliebigen Gemischen in einer Menge von 0.015 mMol/g bis 0.15 mMol/g pro eingesetzter Metalloxid-Oberfläche von 100 m²/g eingesetzt wird, silyliert wird.

Als Basis-(Ausgangs-)-Produkt der Silylierung werden Metalloxide wie Kieselsäure, wie gefällte oder pyrogene, Titandioxid, Aluminiumdioxid, Zirkoniumdioxid und deren Mischoxide, wobei diese im Naßverfahren, Plasmaverfahren oder im Flammprozessen hergestellt sein können, eingesetzt, vorzugsweise werden Kieselsäuren (Siliciumdioxid), besonders bevorzugt pyrogene Kieselsäure, eingesetzt, ganz besonders bevorzugt eine Kieselsäure, die unter wasserfreien Bedingungen hergestellt wird.

In einer bevorzugten Ausführungsform wird das Metalloxid in fluidisierter Form im erfindungsgemäßen Verfahren eingesetzt.

Herstellung der Ausgangs-Kieselsäure

Unter wasserfrei ist hierbei zu verstehen, dass weder im hydrothermalen Herstellungs-Prozess noch in den weiteren Schritten des Prozesses, wie Abkühlung, Reinigung und Lagerung, bis zum fertigen und gereinigten, verpackten und versandfertigen Produkt zusätzliches Wasser in den Prozess zugeführt wird, weder in flüssiger noch in dampfförmiger Form. Es wird dabei jedenfalls nicht mehr als 10 Gew.% Wasser bezogen auf das gesamte Gewicht der Kieselsäure zugegeben, vorzugsweise wird nicht mehr als 5 Gew.%, bevorzugt nicht mehr als 2,5 Gew.%, besonders bevorzugt überhaupt kein Wasser zugegeben.

Es wird vorzugsweise eine Kieselsäure mit erhöhter Oberflächenaktivität, beschreibbar als erhöhte Oberflächenhomogenität, charakterisierbar als minimale Oberflächenrauhigkeit auf molekularer Ebene eingesetzt.

Die Kieselsäure hat vorzugsweise eine mittlere Primärteilchen-Partikelgröße kleiner als 100 nm, bevorzugt mit einer mittleren Primärteilchen-Partikelgröße von 5 bis 50 nm. Diese Primärteilchen existieren nicht isoliert in der Kieselsäure, sondern sind Bestandteile größerer Aggregate und Agglomerate.

Vorzugsweise weist die Kieselsäure eine spezifische Oberfläche von 25 bis 500 $m^2/g$ (gemessen nach der BET Methode nach DIN 66131 und 66132) auf.

Die Kieselsäure weist vorzugsweise Aggregate (Definition nach DIN 53206) im Bereich von Durchmessern 100 bis 1000 nm auf, wobei die Kieselsäure aus Aggregaten aufgebaute Agglomerate (Definition nach DIN 53206) aufweist, die in Abhängigkeit von der äußeren Scherbelastung (z.B. Meßbedingungen) Größen von 1 bis 500 $\mu$m aufweisen.

Vorzugsweise weist die Kieselsäure eine fraktale Dimension der Oberfläche von vorzugsweise kleiner oder gleich 2,3 auf, bevorzugt von kleiner oder gleich 2,1, besonders bevorzugt von 1,95 bis 2,05, wobei die fraktale Dimension der Oberfläche $D_s$ hierbei definiert ist als:

Partikel-Oberfläche A ist proportional zum Partikel-Radius R hoch $D_s$

vorzugsweise weist die Kieselsäure eine fraktale Dimension der Masse $D_m$ von vorzugsweise kleiner oder gleich 2,8, bevorzugt gleich oder kleiner 2,7, besonders bevorzugt von 2,4 bis 2,6 auf. Die fraktale Dimension der Masse $D_m$ ist hierbei definiert als:

Partikel-Masse M ist proportional zum Partikel-Radius R hoch $D_m$.

Vorzugsweise weist die Kieselsäure eine Dichte an zugänglichen, d.h. einer chemischen Reaktion zugänglichen, OberflächenSilanolgruppen SiOH von kleiner als 2,5 SiOH / $nm^2$, vorzugsweise kleiner 2,1 SiOH / $nm^2$, bevorzugt von kleiner als 2 SiOH / $nm^2$, besonders bevorzugt von 1,7 bis 1,9 SiOH / $nm^2$, auf.

Es können bei hoher Temperatur (größer 1000 °C) hergestellte Kieselsäuren eingesetzt werden. Besonders bevorzugt sind pyrogen hergestellte Kieselsäuren. Es können hydrophile Kieselsäuren eingesetzt werden, die frisch hergestellt direkt aus dem Brenner kommen, zwischengelagert oder bereits handelsüblich verpackt sind.

Es können Kieselsäuren, die unverdichtet sind, mit Schüttdichten kleiner 60 g/l, aber auch verdichtete Kieselsäuren, mit Schüttdichten größer 60 g/l, eingesetzt werden.

Es können Gemische aus verschiedenen Kieselsäuren eingesetzt werden, so z.B. Mischungen aus Kieselsäuren unterschiedlicher BET-Oberfläche.

Die Metalloxide, vorzugsweise die Kieselsäure werden nach dem Verfahren zur Herstellung von teilhydrophobem Metalloxid, vorzugsweise pyrogenes, hergestellt, wobei Metalloxid, vorzugsweise fluidisiertes, mit

I) Organosilan der Formel

$$R^1_n SiX_{4-n}$$

wobei n = 1, 2 oder 3 bedeutet
oder Mischungen aus diesen Organosilanen,
wobei $R^1$ ein gesättigter oder einfach bzw. mehrfach ungesättigter, einwertiger, gegebenenfalls halogenierter, Kohlenwasserstoffrest mit 1 bis 24 C-Atomen ist und dabei gleich oder verschieden sein kann und X = Halogen, Stickstoffrest, $OR^2$, $OCOR^2$, $O(CH_2)_x OR^2$ , wobei $R^2$ Wasserstoff oder ein einwertiger Kohlenwasserstoffrest mit 1 bis 12 C-Atomen bedeutet
und x = 1, 2, 3 bedeutet
oder

II) Organosiloxan aufgebaut aus Einheiten der Formel

$$(R^1_3 SiO_{1/2}),$$

und/oder

$$(R^1_2 SiO_{2/2}),$$

und/oder

$$(R^1 SiO_{3/2})$$

wobei $R^1$ die obige Bedeutung hat, wobei
die Anzahl von diesen Einheiten in einem Organosiloxan mindestens 2 ist, und I und II allein oder in beliebigen Gemischen in einer Menge von 0.015 mMol/g bis 0.15 mMol/g pro eingesetzter Metalloxid-Oberfläche von 100 $m^2$/g eingesetzt wird, silyliert wird.

Beispiele für $R^1$ sind Alkylreste wie der Methylrest, der Ethylrest, Propylreste wie der iso- oder der n-Propylrest, Butylreste wie der t- oder n-Butylrest, Pentylreste wie der neo-, der iso- oder der n-Pentylrest, Hexylreste wie der n-Hexylrest, Heptylreste wie der n-Heptylrest, Octylreste wie der 2-Ethyl-hexyl- oder der n-Octylrest, Decylreste wie der n-Decylrest, Dodecylreste wie der n-Dodecylrest, Hexadecylreste wie der n-Hexadecylrest, Octadecylreste wie der n-Octadecylrest, Alkenylreste wie der Vinyl-, der 2-Allyl- oder der 5-Hexenylrest, Arylreste wie der Phenyl-, der Biphenyl- oder Naphthenylrest, Alkylarylreste wie Benzyl-, Ethylphenyl-, Toluyl- oder die Xylylreste, halogenierte Alkylreste wie der 3-Chlorpropyl-, der 3,3,3-Trifluorpropyl- oder der Perfluorhexylethylrest, halogenierte Arylreste wie der Chlorphenyl- oder Chlorbenzylrest.

Bevorzugte Beispiel für $R^1$ sind der Methylrest, der-Octylrest und der Vinylrest, besonders bevorzugt ist der Methylrest.

Beispiele für $R^2$ sind Alkylreste wie der Methylrest, der Ethylrest, Propylreste wie der iso- oder der n-Propylrest, Butylreste wie der t- oder n-Butylrest, Pentylreste wie der neo-, der iso- oder der n-Pentylrest, Hexylreste wie der n-Hexylrest, Heptylreste wie der n-Heptylrest, Octylreste wie der 2-Ethyl-hexyl- oder der n-Octylrest, Decylreste wie der n-Decylrest, Dodecylreste wie der n-Dodecylrest.
Bevorzugte Beispiele für $R^2$ sind der Methyl- und Ethylrest.

Beispiele für Organosilane sind Methyltrichlorsilan, Dimethyldichlorsilan, Trimethylchlorsilan, Methyltrimethoxysilan, Dimethyldimethoxysilan, Trimethylmethoxysilan, Methyltriethoxysilan, Dimethyldiethoxysilan, Trimethylethoxysilan, Methyltriacetoxysilan, Dimethyldiacetoxysilan, Trimethylacetoxysilan, Octylmethyldichlorsilan, Octyltrichlorsilan, Octadecylmethyldichlorsilan, Octadecyltrichlorsilan, Vinyltrichlorsilan, Vinylmethyldichlorsilan, Vinyldimethylchlorsilan, Vinyltrimethoxysilan, Vinylmethyldimethoxysilan, Vinyldimethylmethoxysilan, Vinyltriethoxysilan, Vinylmethyldiethoxysilan, Vinyldimethylethoxysilan, Hexamethyldisilazan, Divinyltetramethyldisilazan, Bis(3,3-trifluorpropyl)tetramethyldisilazan, Octamethylcyclotetrasilazan, Trimethylsilanol.

Es können auch beliebige Gemische aus Organosilanen eingesetzt werden.

Gemische aus Methyl-Chlorsilanen einerseits oder Alkoxysilanen und gegebenenfalls Disilazanen andererseits sind bevorzugt.

Bevorzugt ist Methyltrichlorsilan, Dimethyldichlorsilan und Trimethylchlorsilan oder Hexamethyldisilazan.

Beispiele für Organosiloxane sind lineare oder cyclische Dialkylsiloxane mit einer mittleren Anzahl an Dialkylsiloxyeinheiten von größer als 3. Die Dialkylsiloxane sind bevorzugt Dimethylsiloxane. Besonders bevorzugt sind lineare Polydimethylsiloxane mit folgenden Endgruppen: Trimethylsiloxy, Dimethylhydroxysiloxy, Dimethylchlorsiloxy, Methyldichlorsiloxy, Dimethylmethoxysiloxy, Methyldimethoxysiloxy, Dimethylethoxysiloxy, Methyldiethoxysiloxy, Dimethylacetoxysiloxy, Methyldiacetoxysiloxy, Dimethylhydroxysiloxy, wobei die Endgruppen gleich oder unterschiedlich sein können. Besonders bevorzugt sind unter den genannten Polydimethylsiloxanen solche mit einer Viskosität bei 25 °C von 2 bis 100 mPas und mit den Endgruppen Trimethylsiloxy oder Dimethylhydroxysiloxy.

Weitere Beispiele für Organosiloxane sind flüssige oder lösliche Siliconharze, im besonderen solche, die als Alkylgruppe Methylgruppen enthalten.

Besonders bevorzugt sind solche, die $R^1_3SiO_{1/2}$ und $SiO_{4/2}$ Einheiten enthalten oder solche, die $R^1SiO_{3/2}$ und gegebenenfalls $R^1_2SiO_{2/2}$ Einheiten enthalten. Hierbei ist $R^1$ bevorzugt Methyl.

Bei Organosiloxanen mit einer Viskosität mit größer als 1000 mPas sind solche bevorzugt, die sich in einem technisch handhabaren Lösungsmittel, wie vorzugsweise Alkohole wie Methanol, Ethanol, iso-Propanol, Ether wie Diethylether, Tetrahydrofuran, Siloxane wie Hexamethyldisiloxan, Alkane wie Cyclohexan oder n-Octan, Aromaten wie Toluol oder Xylol, mit einer Konzentration über 10% und einer Mischungsviskosität kleiner als 1000 mPas bei Belegungstemperatur lösen lassen.

Unter bei Belegungstemperatur festen Organosiloxanen sind solche bevorzugt, die sich in einem technisch handhabbaren Lösungsmittel (wie oben definiert) mit einer Konzentration größer als 10 Gew.% und einer Mischungsviskosität kleiner als 1000 mPas bei Belegungstemperatur lösen lassen.

Als Silyliermittel zur Herstellung der silylierten Kieselsäure werden die oben beschriebenen Organosiliciumverbindungen verwendet.

- Es werden zwischen 0,015 mMol und 0,15 mMol, bevorzugt zwischen 0,015 mMol und 0,09 mMol, besonders bevorzugt zwischen 0,03 mMol und 0,09 mMol Silyliermittel pro einer eingesetzten Metalloxid-Oberfläche, vorzugsweise KIESELSÄURE-Oberfläche von 100 $m^2$/g BET-Oberfläche (gemessen nach der BET Methode nach DIN 66131 und 66132) eingesetzt.

- Die Silylierung kann vorzugsweise als diskontinuierliche Reaktion, d.h. im Batch-Verfahen oder als kontinuierliche Reaktion durchgeführt werden. Aus technischen Gründen bevorzugt ist eine kontinuierliche Reaktion.

- Die Reaktion kann vorzugsweise in einem Schritt realisiert werden, oder in 2 oder 3 aufeinanderfolgenden Schritten. Das heißt, der Reaktion kann eine Beladung (Physosorption des Silyliermittels) vorgeschaltet sowie der Reaktion vorzugsweise ein Reinigungsschritt nachgeschaltet sein. Bevorzugt sind 3 sukzessive Schritte: (1) Beladung - (2) Reaktion - (3) Reinigung.

- Die Beladungstemperatur liegt bei vorzugsweise -30°C bis 350°C, bevorzugt 20°C bis 300°C, besonders bevorzugt 20°C - 120 °C.
- Die Reaktionstemperaturen reichen vorzugsweise von 50 bis 400 °C, bevorzugt 50°C bis 350°C, besonders bevorzugt von 50 bis 330 °C.
- Die Reaktionszeiten dauern vorzugsweise von 1 Min bis 24 h, bevorzugt 10 Min bis 8 h, besonders bevorzugt 30 Min bis 4 h.
- Der Reaktionsdruck liegt vorzugsweise im Bereich Normaldruck, Überdruck bis 10 bar, Unterdruck bis 0,2 bar ist möglich.
- Die Reinigungstemperätur reicht vorzugsweise von 100 bis 400 °C, bevorzugt 250°C bis 350°C, besonders bevorzugt von 290 bis 340 °C.
- Eine effektive Bewegung und Durchmischung von Metalloxid, vorzugsweise KIESELSÄURE und Silyliermittel ist notwendig. Dies erfolgt bevorzugt durch mechanische oder gasgetragene Fluidisierung. Eine gasgetragene Fluidisierung kann durch alle inerten Gase erfolgen, die nicht mit dem Silyliermittel, dem Metalloxid, vorzugsweise der KIESELSÄURE, dem silylierten Metalloxid, vorzugsweise der silylierten KIESELSÄURE, und Nebenreaktionprodukten reagieren, also nicht zu Nebenreaktionen, Abbaureaktionen, Oxidationsvorgängen und Flammen- und Explosionserscheinungen führen: wie $N_2$, Ar, andere Edelgase, $CO_2$, etc. Die Zuführung der Gase zur Fluidisierung erfolgt bevorzugt im Bereich von Leerrohrgasgeschwindigkeiten von 0,05 bis 5 cm/s, besonders bevorzugt von 0,05 bis 1 cm/s. Mechanische Fluidisierung kann durch Flügelrührer, Ankerrührer, und sonstige geeignete Rührorgane erfolgen.
- In einer besonders bevorzugten Ausführung wird nur die Gasmenge zugeführt, die zur Aufrechterhaltung einer sauerstoffarmen Atmosphäre ausreicht, bevorzugt weniger als 5 Vol.%, die Fluidisierung erfolgt dann rein mechanisch.
- Die Reaktion wird bevorzugt in einer Atmosphäre durchgeführt, die nicht zur Oxidation des silylierten Metalloxids, vorzugsweise der silylierten KIESELSÄURE führt, d.h. sauerstoffarme Atmosphäre, bevorzugt weniger als 10 Vol. % Sauerstoff, besonders bevorzugt sind weniger als 2,5 Vol.%, wobei beste Ergebnisse bei weniger als 1 Vol.% Sauerstoff erzielt werden.
- Es erfolgt ein effektives Einbringen der Silyliermittel in das Metalloxid, vorzugsweise die KIESELSÄURE. Da es sich bei den Silyliermitteln bei Raumtemperatur und/oder bei Reaktionstemperatur u.a. um flüssige Verbindungen handelt, werden bevorzugt effektive Verdüsungstechniken eingesetzt: Verdüsen in 1-Stoffdüsen unter Druck (5 bis 20 bar), Versprühen in 2-Stoffdüsen unter Druck (Gas und Flüssigkeit 2-20 bar), Feinstverteilen mit Atomizern, etc.
- Bevorzugt wird das Silyliermittel als feinstverteiltes Aerosol zugefügt, dadurch gekennzeichnet, dass das Aerosol eine Sinkgeschwindigkeit von vorzugsweise 0,1 - 20 cm/s aufweist und eine Tropfengröße mit einem aerodynamischen Aquivalentdurchmesser von 5 $\mu$ bis 25 $\mu$m aufweist.
- Wahlweise können vorzugsweise protische Lösemittel hinzugefügt werden, wie flüssige oder verdampfbare Alkohole oder Wasser; typische Alkohole sind iso-Propanol, Ethanol und Methanol. Es können auch Gemische der oben genannten protischen Lösemittel zugefügt werden. Bevorzugt werden keine protischen Lösemittel zugesetzt.
- Wahlweise können vorzugsweise saure oder basische Katalysatoren zugesetzt werden. Diese Katalysatoren können basischen Charakters sein, im Sinne einer Lewis Base oder einer Brönsted Base, wie Ammoniak, oder sauren Charakters sein, im Sinne einer Lewis Säure oder einer Brönsted Säure, wie Chlorwasserstoff. Bevorzugt werden diese in Spuren zugesetzt, d.h weniger als 1000 ppm. Besonders bevorzugt werden keine Katalysatoren zugesetzt.
- Der Reinigungsschritt ist durch Bewegung gekennzeichnet, wobei langsame Bewegung und geringes Durchmischen bevorzugt ist.
- Der Reinigungsschritt ist weiterhin durch erhöhten Gaseintrag gekennzeichnet, entsprechend einer Leerrohrgasgeschwindigkeit von 0,001 bis 10 cm/s, bevorzugt von 0,01 bis 1 cm/s.
- Zusätzlich kann der Reinigungsschritt ein Mischen mit mechanischen Rührorganen beinhalten. Die Rührorgane werden dabei so eingestellt und bewegt, dass bevorzugt Mischen und Fluidisieren, jedoch nicht völlige Verwirbelung eintritt.
- Zusätzlich können während des Silylierschrittes Verfahren zur mechanischen Verdichtung eingesetzt werden, wie zum Beispiel Presswalzen, Kugelmühlen, Kollergänge, Schraubenverdichter, Brikettierer.
- Zusätzlich können während des Silylierschrittes Verfahren zur Desagglomerierung des Metalloxids, vorzugsweise der Kieselsäure, eingesetzt werden, wie Stiftmühlen oder Vorrichtungen zur Mahlsichtung.
- Zusätzlich können im Anschluss an die Reinigungsverfahren Verfahren zur mechanischen Verdichtung der Kieselsäure eingesetzt werden, wie zum Beispiel Presswalzen, oder Verdichten durch Absaugen des Luft- oder Gasinhaltes durch geeignete Vakuummethoden oder andere Verfahren zur mechanischen Verdichtung wie zum Beispiel Presswalzen, Kugelmühlen, Kollergänge, Schraubenverdichter, Brikettierer.
- Zusätzlich können im Anschluß an die Reinigung Verfahren zur Desagglomerierung de Metalloxids, vorzugsweise der Kieselsäure, eingesetzt werden, wie Stiftmühlen oder Vorrichtungen zur Mahlsichtung.

- In einer bevorzugten Ausführung werden die nichtabreagierten Silyliermittel, Nebenreaktionsprodukte, nicht chemisch fixierten und gegebenenfalls veränderten Silyliermittelüberschüsse, Abreinigungsprodukte und Abgase aus dem Reinigungsschritt in geeignet temperierten Vorrichtungen wieder in den Schritt der Belegung und Beladung des Metalloxids, vorzugsweise der Kieselsäure, zurückgeführt; dies kann teilweise oder vollständig geschehen, bevorzugt zu 50-90 Vol.% des gesamten Volumenstromes der aus der Abreinigung austretenden Gasvolumina.

Ein weiterer Gegenstand ist eine teilhydrophobe Kieselsäure, deren Partikel einen Kontaktwinkel θ in Luft gegen Wasser von kleiner 180° aufweisen, wobei der Bedeckungsgrad τ der Oberfläche der Kieselsäure mit Silyliermittelresten bezogen auf die Gesamt-Kieselsäure-Partikel-Oberfläche, 1% < τ < 50% beträgt, wobei die Dichte der Oberflächensilanolgruppen SiOH sich zwischen minimal 0,9 und maximal 1,7, bevorzugt 1,0 - 1,7, besonders bevorzugt 1,2 - 1,7 SiOH pro $nm^2$ Partikeloberfläche bewegt und einen Kohlenstoffgehalt von kleiner 0,1 - 2,0, bevorzugt 0,1 - 1,6, besonders bevorzugt 0,1 - 1,4 Gew.% bei einer spezifischen Oberfläche von 100 $m^2$/g aufweist sowie eine Methanolzahl von kleiner 30, bevorzugt kleiner 20 aufweist.

Die Kieselsäure weist einen Kohlenstoffgehalt bei einer spezifischen Oberfläche von 100 $m^2$/g von vorzugsweise 0,1 - 0,8, bevorzugt 0,1 - 0,67, besonders bevorzugt 0,1 - 0,5 auf.

Die erfindungsgemäße Kieselsäure ist dadurch gekennzeichnet, daß sie bei Kontakt mit Wasser im wesentlichen vollständig benetzbar ist. Für die erfindungsgemäße Kieselsäure bedeutet dies, dass beim Einschütteln in Wasser die Kieselsäure einsinkt und der Anteil, der an der Wasseroberfläche aufschwimmt vorzugsweise kleiner 30 Gew.%, bevorzugt kleiner 5 Gew.% und besonders bevorzugt kleiner 1 Gew.% ist.

Bevorzugt sind die Partikel dadurch gekennzeichnet, dass sie gegenüber Wasser keine vollständige Unbenetzbarkeit aufweisen, also einen Kontaktwinkel θ in Luft gegen Wasser von kleiner 180° aufweisen. Bevorzugt liegt der Kontaktwinkel θ der Partikel gegen Wasser, zwischen 100° und 0°.

Besonders bevorzugt liegt der Kontaktwinkel θ der Partikel gegen Wasser zwischen 90° und 0°.

Für erfindungsgemäße Partikel, die bevorzugt Metalloxid-Partikel sind, bedeutet dies, dass die Metalloxide bevorzugt teilweise hydrophobiert sind, bevorzugt teilweise syliert sind.

Erfindungsgemäß teilweise syliert bedeutet hier, dass weder die gesamte Metalloxid-Oberfläche unsilyliert ist, noch dass die gesamte Metalloxid-Oberfläche silyliert ist. Der Bedeckungsgrad τ der Oberfläche mit Silyliermittelresten ist dabei bezogen auf die Gesamt-Metalloxid-Partikel-Oberfläche 1% < τ < 50%, bevorzugt 1% < τ < 30% und besonders bevorzugt 10% < < 30%.

Die Bedeckung mit Silyliermittel kann dabei beispielsweise mittels Elementaranalyse, wie den Kohlenstoffgehalt, ermittelt werden, oder durch Bestimmung des Rest-Gehaltes an reaktiven Oberflächen-OH-Gruppen des Metalloxides.

Für pyrogenes Siliciumdioxid bedeutet Teilsilylierung hier, dass der Gehalt an nicht-silylterten Oberflächensilanolgruppen an der Siliciumdioxidoberfläche sich zwischen mindestens 50% und maximal 95% des Ausgangs-Siliciumdioxids bewegt; das Ausgangs-Siliciumdioxid (100 Gew.%) weist 1,5 - 2,5 SiOH pro $nm^2$ spezifischer Oberfläche, bevorzugt 1,6 - 2,0 SiOH pro $nm^2$ auf. Dies bedeutet, dass die Dichte der Oberflächensilanolgruppen SiOH sich zwischen minimal 0,9 und maximal 1,7, bevorzugt 1,0 - 1,7, besonders bevorzugt 1,2 - 1,7 SiOH pro $nm^2$ Partikeloberfläche bewegt.

Für ein Siliciumdioxid von 200 $m^2$/g spezifischer Oberfläche, das zur Silylierung herangezogen wird, bedeutet dies 0,3 mMol/g SiOH bis 0,57 mMol/g SiOH; für ein Siliciumdioxid mit geringer bzw. größerer Oberfläche bedeutet dies linear proportional mehr oder weniger Oberflächensilanolgruppen SiOH.

Vollständige Wasserbenetzung pyrogenen Siliciumdioxids tritt dann auf, wenn dieses kleiner 0,1 Gew.% Kohlenstoffgehalt bei einer spezifischen Oberfläche von 100 $m^2$/g aufweist. Für ein Siliciumdioxid mit geringer bzw. größerer Oberfläche bedeutet das linear proportional mehr oder weniger Kohlenstoffgehalt.

Bevorzugt ist pyrogenes Siliciumdioxid, das nicht völlig Wasser-benetzbar ist, und einen Kohlenstoffgehalt von vorzugsweise größer 0,1 Gew.% bei einer spezifischen Oberfläche von 100 $m^2$/g aufweist. Für ein Siliciumdioxid mit geringer bzw. größerer Oberfläche bedeutet dies linear proportional mehr oder weniger Kohlenstoffgehalt.

Bevorzugt ist pyrogenes Siliciumdioxid, das nicht völlig Wasser-unbenetzbar ist, und einen Kohlenstoffgehalt von kleiner 1 Gew.% bei einer spezifischen Oberfläche von 100 $m^2$/g aufweist. Für ein Siliciumdioxid mit geringerer bzw. größerer Oberfläche bedeutet dies linear proportional mehr oder weniger Kohlenstoffgehalt.

Bevorzugt weist pyrogenes Siliciumdioxid, das nicht völlig Wasser-unbenetzbar ist, eine Methanolzahl von kleiner 30 auf.

Beispiele zu Messverfahren für Kontaktwinkeln an Pulvern

1) Der Kontaktwinkel der Partikel kann durch sorgfältiges Herstellen mit üblichen Methoden eines Presslings des pulverförmigen Feststoffes bestehend aus Partikeln und anschließender Bestimmung des Kontaktwinkels gegen eine bekannte und definierte Flüssigkeit, bevorzugt eines Reinstoffes, mit bekannter Oberflächenspannung an Luft mit herkömmlichen Methoden, z.B. Goniometer oder durch digitale Bildauswertung, erhalten werden.

Der Kontaktwinkel θ definiert das Verhältnis der Oberflächenspannungen und -energien γ von Flüssigkeiten (1) und Feststoffen (s) in einem Gasraum (g) wie folgt.

$$\cos(\theta) = (\gamma(sl) - \gamma(sg)) / \gamma(lg)$$

Die Oberflächenenergie (mJ/m$^2$) eines Feststoffes ist dimensionsgleich mit der Oberflächenspannung einer Flüssigkeit (mN/m), da gilt [J] = [N*m].

2) Der Kontaktwinkel kann durch Imbibitionsmethoden unter Verwendung der Lucas-Washburn-Gleichung ermittelt werden. Diese beruht auf dem Einsaugen einer bekannten und definierten Flüssigkeit, bevorzugt eines Reinstoffes, mit bekannter Oberflächenspannung, in ein definiertes Haufwerk, oder einen schwach verdichteten Pressling, oder ein mit den Partikeln beschichtetes Klebeband, mit einer offenen Porosität und Porenradius r, bevorzugt Porosität größer 0,25, des Partikelhaufwerks. Die Aufsauggeschwindigkeit dh/dt bzw. die Höhe der aufgesaugten Flüssigkeitsäule h, berechnet aus der Massenaufnahme m an Flüssigkeit durch das Partikelhaufwerk gegen die Zeit t, sowie die Viskosität der aufgesaugten Flüssigkeit η sowie die Oberflächenspannung γ der aufgesaugten Flüssigkeit lassen bei bekanntem Partikelradius r mittels der Gleichung nach <u>Lucas-Washburn</u> (Washburn, E.W., Phys. Rev. 17, 273 (1921) und R. Lucas, Kolloid Z. 23, 15 (1918)) den Wert Cosinus von θ ( cos (θ) ) und damit den Kontakt- oder Randwinkel θ der Flüssigkeit gegen die Partikeloberfläche ermitteln:

$$dh/dt = r * \gamma * \cos(\theta) / (4 * \eta)$$

oder

$$h^2 = r * \gamma * t * \cos(\theta) / (2 * \eta)$$

Weitere Details zur Methodenbeschreibung sind zu finden bei J. Schoelkopf et al, J. Colloid. Interf. Sci. 227, 119-131 (2000).

t = A · m$^2$     Washbum-Gteichung.

mit

t :     Zeit
m :     Masse der angesaugten Flüssigkeit

$$A = \frac{\eta}{\{ C \cdot \rho^2 \cdot \gamma \cdot \cos \vartheta \}}$$

η :     Viskosität der. Flüssigkeit
ρ :     Dichte der Flüssigkeit
γ :     Oberflächenspannung der Flüssigkeit.
ϑ :     Randwinkel Flüssigkeit-Pulver.
C :     Faktor, nur abhängig von den geometrischen Eigenschäften des Pulvers und Probenrohrs

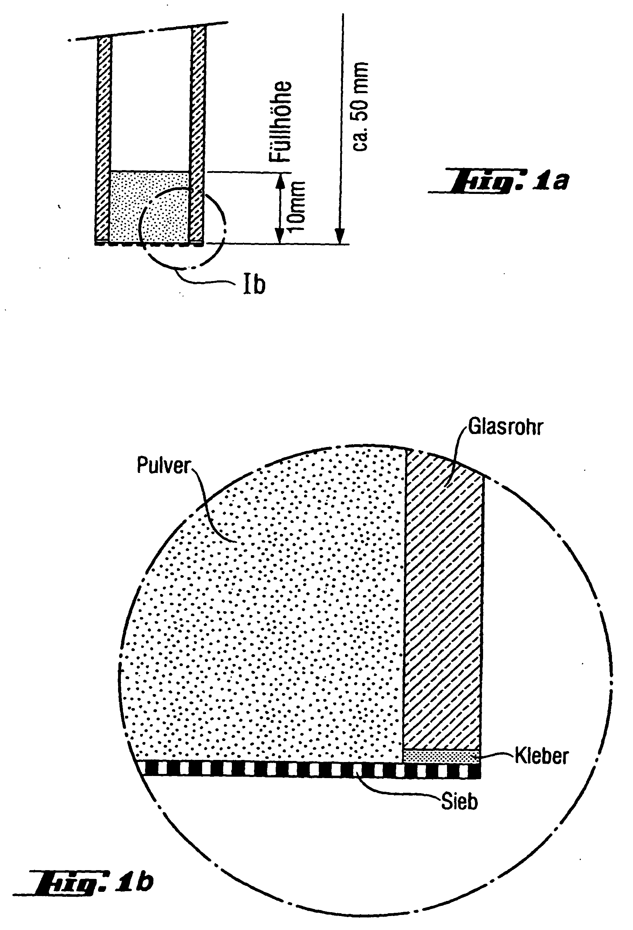

Eine Illustration des Messverfahrens ist in Figur 1 zu finden.

Beispiele für Messverfahren zur Bestimmung der Oberflächenenergie von Partikeln

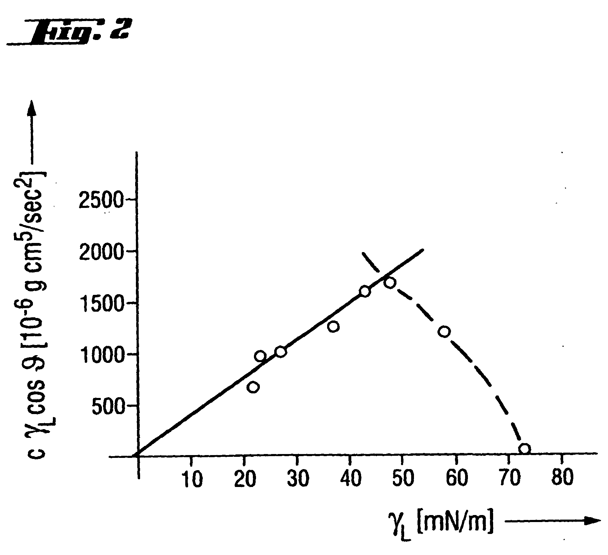

3) Wiederholen des Versuches unter 1) oder 2) mit verschiedenen Flüssigkeiten mit unterschiedlichen Oberflächenspannungen. 3a) Auftragung des Cosinus der ermittelten Kontaktwinkel θ in einem Zisman-Plot gegen die Oberflächenspannung γ der eingesetzten Flüssigkeiten, cos (θ) = f (γ) liefert als Schnittpunkt mit der Abszisse die kritische Oberflächenenergie $\gamma_{crit}$ als Maß für die Oberflächenenergie γ der Partikel. 3b) Auftragung des Ansaugparameters A in einem Zisman-Plot gegen die Oberflächenspannung γ der eingesetzten Flüssigkeiten, liefert am Scheitelpunkt der Kurve (Maximum) als zugehörigen Abszissenwert die kritische Oberflächenenergie $\gamma_{crit}$ als Maß für die Oberflächenenergie γ der Partikel. (Siehe Diagramm Figur 2)

4) Für Partikel, die Agglomerate mit Schüttdichten $d_{SD}$ << 1 g/ml bilden, bestehend aber aus Primärpartikeln mit Materialdichten $d_{MD}$ > 1 g/ml, kann Einschütteln in Flüssigkeiten verschiedener Oberflächenspannung als Methode herangezogen werden: Bei Nichtbenetzung schwimmen die Partikel-Agglomerate auf; bei Benetzung wird die Luft in den Agglomeraten verdrängt, und die Partikel-Agglomerate sinken ein.

Bei Verwendung verschiedener Flüssigkeiten mit verschiedener Oberflächenspannung kann exakt die Oberflächenspannung einer Flüssigkeit ermittelt werden, bei der die Partikel-Agglomerate einsinken; diese liefert die kritische Oberflächenenergie γcrit als Maß für die Oberflächenenergie γ der Partikel.

Die Methode kann auch dergestalt vereinfacht werden, dass die Oberflächenspannung von Wasser (72,5 mN/m) durch Zugabe von Methanol, Ethanol oder iso-Propanol verringert wird. 4a) Typischerweise wird dann Wasser vorgelegt, eine bestimmte Menge an Partikel-Agglomeraten auf die Wasseroberfläche aufgelegt (schwimmend) und dann der Alkohol zutitriert, unter Rühren. Das Wasser zu Alkohol-Verhältnis bei Einsinken der Partikel-Agglomerate wird notiert und genau für dieses Verhältnis Wasser: Alkohol in einem getrennten Versuch mit Standardmethoden (Ringabreißmethode, Wilhelmy-Methode) die Oberflächenspannung bestimmt.

4b) In einer anderen Ausführung können auch definierte Mischungen von Wasser mit den oben genannten niederen Alkoholen hergestellt werden, und dann die Oberflächenspannungen dieser Gemische bestimmt werden. In einem getrennten Experiment werden diese Wasser: Alkohol Mischungen mit definierten Mengen an Partikel-Agglomeraten überschichtet (beispielsweise in einem Volumenverhältnis 1:1) und unter definierten Bedingungen geschüttelt (beispielweise schwaches Schütteln mit der Hand oder mit einem Taumelmischer für ca. 1 Minute). Bestimmt wird das Wasser: Alkohol-Gemisch, bei dem die Partikel-Agglomerate eben noch nicht einsinken und das Wasser : Alkohol-Gemisch mit höherem Alkoholgehalt, bei dem die Partikel-Agglomerate eben einsinken. Die Oberflächenspannung des letzteren Alkohol : Wasser-Gemisches liefert die kritische Oberflächenenergie $\gamma_{crit}$ als Maß für die Oberflächenenergie γ der Partikel.

Methanolzahl: Wird als Alkohol Methanol verwendet, ergibt der Methanolgehalt in Wasser die Methanolzahl.

Die oberflächenmodifizierte Kieselsäure ist im weiteren dadurch gekennzeichnet, dass es in wäßrigen Systemen, wie Lösungen; Suspensionen, Emulsionen und Dispersionen von organischen Harzen in wässrigen Systemen (z.B.: Polyester, Vinylester, Epoxid, Polyurethan, Alkydharze, u.a.) eine hohe Verdickungswirkung aufweist, und damit als rheologisches Additiv in diesen Systemen geeignet ist.

Die Erfindung betrifft daher allgemein den Einsatz der Kieselsäure in wäßrigen Systemen als viskositätsgebende Komponente. Dies betrifft alle wasserverdünnbaren, filmbildende Anstrichmittel, gummiartige bis harte Beschichtungen, Klebstoffe, Versiegelungs- und Verpußmassen sowie andere vergleichbare Systeme.

Ein weiterer Gegenstand ist eine Emulsion, die eine erfindungsgemäße Kieselsäure oder ein nach dem erfindungsgemäßen Verfahren hergestelltes Metalloxid, vorzugsweise eine Kieselsäure, enthält.

Das oberflächenmodifizierte Metalloxid, vorzugsweise die oberflächenmodifizierte Kieselsäure, ist im weiteren dadurch gekennzeichnet, daß sie zur Stabilisierung von Emulsionen im Sinne feststoffstabilisierter Emulsionen eingesetzt werden kann. Es können sowohl Wasser-in-Öl- (w/o) als auch Öl-in-Wasser- (o/w) Emulsionen stabilisiert werden.

Die Emulsionen können neben der Kieselsäure weitere organische oder anorganische Emulgatoren enthalten, bevorzugt enthalten die Emulsionen keine weiteren Emulgatoren neben der erfindungsgemäßen Kieselsäure.

Der Gehalt der Emulsionen an der erfindungsgemäßen Kieselsäure beträgt kleiner 20 Gew. %, bevorzugt kleiner 10 Gew. %, besonders bevorzugt kleiner 5 Gew. %.

Weitere Gegenstände sind ein Toner und ein Additiv zur Steuerung der Rheologie von flüssigen und pulverförmigen Systemen, die ein erfindungsgemäßes Metalloxid, vorzugsweise eine erfindungsgemäße Kieselsäure, oder ein nach dem erfindungsgemäßen Verfahren hergestelltes Metalloxid, vorzugsweise eine Kieselsäure, enthalten.

Das oberflächenmodifizierte Metalloxid, vorzugsweise eine Kieselsäure, ist im weiteren dadurch gekennzeichnet, dass es in pulverförmigen Systemen Verbackungen oder Verklumpungen, z.B. unter Feuchteeinfluß, verhindert, aber auch nicht zur Reagglomeration neigt, und damit zur unerwünschten Separierung, sondern Pulver fließfähig erhält und somit belastungsstabile und lagerstabile Mischungen ermöglicht. Dies gilt im besonderen für den Einsatz in nichtmagnetischen und magnetischen Tonern und Entwicklern und Ladungssteuerungshilfsmitteln, z.B. in kontaktlosen oder elektrofotografischen Druck-/Reproduktionsverfahren, die 1- und 2-Komponenten-Systeme sein können. Dies gilt auch in pulverförmigen Harzen, die als Anstrichsysteme verwendet werden.

Das oberflächenmodifizierte Metalloxid, vorzugsweise eine Kieselsäure, ist im weiteren dadurch gekennzeichnet, dass die Kieselsäure zur rheologischen Steuerung in lösungsmittelbasierenden und lösungsmittelfreien, nichtwäßrigen Systemen eingesetzt werden kann, wie:

- Epoxidsysteme
- Polyurethansysteme (PUR)
- Vinylesterharze
- Ungesättigte Polyesterharze
- Lösemittelfreie Harze, die in Pulverform z.B. als Beschichtungsstoffe appliziert werden.

Die Bindemittel sind dabei im allgemeinen dadurch gekennzeichnet, dass es sich um unpolare Harze, d.h. um Harze, die keine oder zumindest nur eine kleine Anzahl von funktionellen Gruppen aufweisen, die zu Wechselwirkungen mit der Oberfläche der Kieselsäure in der Lage sind, wie z.B. Carbonyl-, Ester- oder OH-Gruppen.

Das Metalloxid, vorzugsweise die Kieselsäure, liefert als rheologisches Additiv in diesen Systemen die erforderte notwendige Viskosität, Strukturviskosität, Thixotropie und eine für das Standvermögen an senkrechten Flächen ausreichende Fließgrenze.

**Beispiele**

**Herstellung und Charakterisierung der Kieselsäuren**

**Beispiel 1**

Bei einer Temperatur von 25 °C unter Inertgas $N_2$ werden zu 100 g an hydrophiler KIESELSÄURE, mit einer Feuchte kleiner 1% und einem HC1 Gehalt kleiner 100 ppm und mit einer spezifischen Oberfläche von 200 $m^2$/g (gemessen nach der BET Methode nach DIN 66131 und 66132) (erhältlich unter dem Namen WACKER HDK N20 bei Wacker-Chemie GmbH, München, D), durch Verdüsen über eine Einstoffdüse (Druck 5 bar), 1,70 g einer Mischung aus 0,37 g $H_2O$ und 1,33 g MeOH und 2,86 g Dimethyldichlorsilan zugefügt. Die so beladene KIESELSÄURE wird bei einer Verweilzeit von 2 Stunden bei 250 °C in einem 100 1 Trockenschrank unter $N_2$ zur Reaktion gebracht.
Die Analysedaten sind in Tabelle 1 aufgeführt.

**Beispiel 2**

In einer kontinuierlichen Apparatur werden bei einer Temperatur von 30°C unter Inertgas $N_2$ zu einem Massestrom von 1500 g/h an hydrophiler KIESELSÄURE, mit einer Feuchte kleiner 1% und einem HC1 Gehalt kleiner 100 ppm und mit einer spezifischen Oberfläche von 300 $m^2$/g (gemessen nach der BET Methode nach DIN 66131 und 66132) (erhältlich unter dem Namen WACKER HDK T30 bei Wacker-Chemie GmbH, München, D), 20 g/h VE (VE = vollentsalztes) -Wasser in feinstverteilter Form zugedüst und 40 g/h Hexamethyldisilazan, in flüssiger, feinstverteilter Form durch Verdüsen über eine Einstoffdüse (Druck 10 bar) zugefügt. Die so beladene KIESELSÄURE wird bei einer Verweilzeit von 4 Stunden bei einer Temperatur von 80 °C zur Reaktion gebracht und dabei weiter mittels Rühren fluidisiert, und anschließend in einem Trockner bei 150 °C und 2 Stunde Verweilzeit gereinigt. Erhalten wird ein hydrophobes weißes KIESELSÄURE-Pulver mit homogener Silyliermittelschicht.
Die Analysedaten sind in Tabelle 1 aufgeführt.

**Beispiel 3**

In einer kontinuierlichen Apparatur werden bei einer Temperatur von 30 °C unter Inertgas $N_2$ zu einem Massestrom von 1500 g/h an hydrophiler KIESELSÄURE, mit einer Feuchte kleiner 1% und einem HC1 Gehalt kleiner 100 ppm und mit einer spezifischen Oberfläche von 150 $m^2$/g (gemessen nach der BET Methode nach DIN 66131 und 66132) (erhältlich unter dem Namen WACKER HDK V15 bei Wacker-Chemie GmbH, München, D), 10 g/h VE-Wasser in feinstverteilter Form zugedüst und 20 g/h Hexamethyldisilazan, in flüssiger, feinstverteilter Form durch Verdüsen über eine Einstoffdüse (Druck 10 bar) zugefügt. Die so beladene KIESELSÄURE wird bei einer Verweilzeit von 4 Stunden bei einer Temperatur von 80 °C zur Reaktion gebracht und dabei weiter mittels Rühren fluidisiert, und anschließend in einem Trockner bei 150 °C und 2 Stunde Verweilzeit gereinigt. Erhalten wird ein hydrophobes weißes KIESELSÄURE-Pulver mit homogener Silyliermittelschicht.
Die Analysedaten sind in Tabelle 1 aufgeführt.

**Beispiel 4**

In einer kontinuierlichen Apparatur werden bei einer Temperatur von 30 °C unter Inertgas $N_2$ zu einem Massestrom von 1000 g/h an hydrophiler KIESELSÄURE, mit einer Feuchte kleiner 1% und einem HC1 Gehalt kleiner 100 ppm und mit einer spezifischen Oberfläche von 200 $m^2$/g (gemessen nach der BET Methode nach DIN 66131 und 66132) (erhältlich unter dem Namen WACKER HDK N20 bei Wacker-Chemie GmbH, München, D), 10 g/h eines OH-endständigen Polydimethylsiloxans mit einer Viskosität bei 25 °C von 40 mPas und einem OH-Gehalt von 4 Gew.% in flüssiger, feinstverteilter Form durch Verdüsen über eine Einstoffdüse (Druck 10 bar) zugefügt. Die so beladene KIESELSÄURE wird bei einer Verweilzeit von 4 Stunden bei einer Temperatur von 300 °C zur Reaktion gebracht und dabei weiter mittels Rühren fluidisiert, und anschließend in einem Trockner bei 150°C und 2 Stunde Verweilzeit gereinigt. Erhalten wird ein hydrophobes weißes KIESELSÄURE-Pulver mit homogener Silyliermittelschicht.
Die Analysedaten sind in Tabelle 1 aufgeführt.

**Beispiel 5**

Bei einer Temperatur von 25 °C unter Inertgas $N_2$ werden zu 100 g an hydrophiler KIESELSÄURE, mit einer Feuchte kleiner 1% und einem HCl Gehalt kleiner 100 ppm und mit einer spezifischen Oberfläche von 200 m$^2$/g (gemessen nach der BET Methode nach DIN 66131 und 66132) (erhältlich unter dem Namen WACKER HDK N20 bei Wacker-Chemie GmbH, München, D), durch Verdüsen über eine Einstoffdüse (Druck 5 bar), 2,00 g eines OH-endständigen Polydimethylsiloxans mit einer Viskosität bei 25 °C von 40 mPas und einem OH-Gehalt von 4 Gew.%, zugefügt. Die so beladene KIESELSÄURE wird bei einer Verweilzeit von 3 Stunden bei 300 °C in einem 100 1 Trockenschrank unter $N_2$ zur Reaktion gebracht.
Die Analysedaten sind in Tabelle 1 aufgeführt.

**Tabelle 1 Analysedaten der KIESELSÄURE der Beispiele 1 bis 5**

| Beispiel | %C | % SiOH-Rest | BET | WT | MZ | $\theta_{wasser}$/° |
|---|---|---|---|---|---|---|
| 1 | 0,56 | 80 | 184 | Ja | 0 | 84,1 |
| 2 | 0,95 | 82 | 234 | Ja | 5 | 90,3 |
| 3 | 0,41 | 74 | 112 | Ja | 15 | 92,4 |
| 4 | 0,35 | 94 | 182 | Ja | 0 | 88,7 |
| 5 | 0,61 | 84 | 169 | Ja | 0 | 100,3 |

**Beschreibung der Analysenmethoden**

1. Kohlenstoffgehalt (%C)

- Elementaranalyse auf Kohlenstoff; Verbrennen der Probe bei über 1000°C im $O_2$-Strom, Detektion und Quantifizierung des entstehenden $CO_2$ mit IR; Gerät LECO 244

2. Restgehalt an nicht silylierten KIESELSÄURE-Silanolgruppen

- Methode: Säure-Base-Titration der in Wasser/Methanol = 50:50 suspendierten Kieselsäure; Titration im Bereich oberhalb des pH-Bereichs des isoelektrischen Punktes und unterhalb des pH-Bereichs der Auflösung der Kieselsäure
- unbehandelte Kieselsäure mit 100% SiOH (KIESELSÄURE-Oberflächensilanolgruppen): SiOH-phil = 2 SiOH / nm$^2$
- silylierte Kieselsäure: SiOH-silyl
- Kiesel-Rest-Silanolgehalt: %SiOH = SiOH-silyl/SiOHphil*100% (analog G.W. Sears, Anal. Chem, 28 (12), (1950), 1981)

3. Test (ja/nein) der Benetzbarkeit mit Wasser (WT):
Einschütteln eines gleichen Volumens der Kieselsäure mit gleichem Volumen an Wasser;

- bei Benetzung (hydrophil) sinkt KIESELSÄURE ein: JA,
- bei Nicht-Benetzung (hydrophob) schwimmt KIESELSÄURE auf: NEIN,

4. Test (Volumen% MeOH in Wasser) der Benetzbarkeit mit Wasser-Methanol Gemischen = Methanolzahl (MZ):

Einschütteln eines gleichen Volumens der Kieselsäure mit gleichem Volumen an Wasser-Methanol Gemisch

- Start mit 0% Methanol
- bei Nicht-Benetzung schwimmt KIESELSÄURE auf: Es ist ein Gemisch mit um 5Vol% höherem MeOH Gehalt zu verwenden
- bei Benetzung sinkt KIESELSÄURE ein: Anteil MeOH (%) in Wasser gibt MZ (MZ = Methanolzahl)

**Herstellung und Charakterisierung kieselsäure-stabilisierter Emulsionen**

**Beispiel 6**

Herstellung einer Kieselsäuredispersion:

10 ml einer 0,01 molaren Lösung von NaCl in VE-Wasser wurden mit 2 Gew. % einer Kieselsäure aus Beispiel 1 versetzt und 5 min unter Eiskühlung mit einer Ultraschallspitze behandelt (10 W, 40 kHz).

Herstellung der Emulsion:

5 ml der oben beschriebenen wässrigen Dispersion wurden mit 5 ml Toluol versetzt und mittels eines Ultra-Turrax (IKA Labortechnik) bei 3000 rpm für 2 min homogenisiert. Es bildete sich eine stabile Emulsion.
Die Analysedaten der Emulsion sind in Tabelle 2 zusammengefaßt.

**Beispiel 7**

5 ml der in Beispiel 6 beschriebenen wässrigen Dispersion wurden mit 5 ml eines Trimethylsilyl-terminierten Polydimethylsiloxanes der Viskosität $\eta$ = 1000 mPas (erhältlich unter dem Namen AK 1000 bei der Wacker-Chemie GmbH, Burghausen, D) versetzt und mittels eines Ultra-Turrax (IKA Labortechnik) bei 3000 rpm für 2 min homogenisiert. Es bildete sich eine stabile Emulsion.
Die Analysedaten der Emulsion sind in Tabelle 2 zusammengefaßt.

**Beispiel 8**

5 ml der in Beispiel 6 beschriebenen wässrigen Dispersion wurden mit 5 ml eines OH-terminierten Polydimethylsiloxanes der Viskosität $\eta$ = 1000 mPas (erhältlich unter dem Namen OH-Polymer 1000 bei der Wacker-Chemie GmbH, Burghausen, D) versetzt und mittels eines Ultra-Turrax (IKA Labortechnik) bei 3000 rpm für 2 min homogenisiert. Es bildete sich eine stabile Emulsion.
Die Analysedaten der Emulsion sind in Tabelle 2 zusammengefaßt.

**Beispiel 9**

3 ml einer gemäß Beispiel 6 erhaltenen wässrigen Dispersion einer Kieselsäure aus Beispiel 3 wurden mit 7 ml eines OH-terminierten Polydimethylsiloxanes der Viskosität $\eta$ = 1000 mPas (erhältlich unter dem Namen OH-Polymer 1000 bei der Wacker-Chemie GmbH, Burghausen, D) versetzt und mittels eines Ultra-Turrax (IKA Labortechnik) bei 3000 rpm für 2 min homogenisiert. Es bildete sich eine stabile Emulsion.
Die Analysedaten der Emulsion sind in Tabelle 2 zusammengefaßt.

Tabelle 2

|  | Leitfähigkeit ($\mu$S/cm) | Typ | Stabilität |
|---|---|---|---|
| Beispiel 6 | 480 | o/w | > 4 Wochen |
| Beispiel 7 | 472 | o/w | > 4 Wochen |
| Beispiel 8 | 420 | o/w | > 4 Wochen |
| Beispiel 9 | 3 | w/o | > 4 Wochen |

**Beispiel 10**

Beispiel einer w/o und w/o/w Mehrfachemulsion

Schritt 1

Zu 80 ml eines Toluol werden 1 g einer hydrophoben, mit Dimethylsiloxy-Gruppen silylierten pyrogenen Kieselsäure (erhältlich unter dem Namen Wacker HDK H30 bei der Wacker-Chemie GmbH) (hergestellt durch Silylierung einer pyrogenen Kieselsäure mit BET Oberfläche von 300 m$^2$/g) mit einem Kohlenstoffgehalt von 1,8 Gew.% und einem Gehalt an Oberflächensilanolgruppen von 0,83 mMol/g (entsprechend einem Restgehalt an Oberflächensilanolgruppen von 51% relativ zu Ausgangskieselsäure) hinzugefügt und anschließend mit einem Ultraschallgeber (Sonics & Material, 20 kHz bei 10 W) für 2 Minuten dispergiert. Anschließend werden 20 ml VE-Wasser hinzugefügt und mit einem Ultra-Turrax Rotor-Stator-Homogenisator (1,8 cm Durchmesser) bei 13.000 UpM für 2 Minuten emulgiert.
Es resultiert eine stabile w/o Emulsion, damit ist auch eine w/o Emulsion hergestellt.

Schritt 2 Herstellung einer w/o/w Mehrfachemulsion

Zu 80 ml VE-Wasser werden 1 g einer gemäß Beispiel 2 erhaltene Kieselsäure hinzugefügt und anschließend mit einem Ultraschallgeber (Sonics & Material, 20 kHz bei 10 W) für 2 Minuten dispergiert. Anschließend werden 20 ml der oben beschriebenen w/o Emulsion hinzugefügt und mit einem Ultra-Turrax Rotor-Stator-Homogenisator (1,8 cm Durchmesser) bei 11.000 UpM) für 10 Sekunden emulgiert.
Es resultiert eine für über 15 Monate und gegen Scherung stabile w/o/w Mehrfachemulsion, die keinerlei Koaleszenz zeigt.

Tröpfchengrößen mit Lichtbeugung (Malvern MasterSizer MS20)

| | |
|---|---|
| innere (w) Tröpfchen in (o) | 0,9 μm |
| äußere (w/o) Tröpfchen in (w) | 28 μm |

**Patentansprüche**

1.   Verfahren zur Herstellung von teilhydrophobem Metalloxid, **dadurch gekennzeichnet, dass** das Metalloxid mit

I) Organosilan der Formel

$$R^1_n \, SiX_{4-n}$$

wobei n = 1, 2 oder 3 bedeutet
oder Mischungen aus diesen Organosilanen,
wobei $R^1$ ein gesättigter oder einfach bzw. mehrfach ungesättigter, einwertiger, gegebenenfalls halogenierter, Kohlenwasserstoffrest mit 1 bis 24 C-Atomen ist und dabei gleich oder verschieden sein kann und X = Halogen, Stickstoffrest, $OR^2$, $OCOR^2$, $O(CH_2)_x OR^2$ , wobei $R^2$ Wasserstoff oder ein einwertiger Kohlenwasserstoffrest mit 1 bis 12 C-Atomen bedeutet und x = 1, 2, 3 bedeutet
oder
II) Organosiloxan aufgebaut aus Einheiten der Formel

$$(R^1_3 SiO_{1/2}),$$

und/oder

$$(R^1_2 SiO_{2/2}),$$

und/oder

$$(R^1SiO_{3/2})$$

wobei $R^1$ die obige Bedeutung hat, wobei
die Anzahl von diesen Einheiten in einem Organosiloxan mindestens 2 ist, und I und II allein oder in beliebigen Gemischen in einer gesamten Menge von 0,015 mMol/g bis 0,15 mMol/g pro einer eingesetzten Metalloxid-Oberfläche von 100 $m^2$/g BET-Oberfläche (gemessen nach der BET Methode nach DIN 66131 und 66132) eingesetzt wird, silyliert wird.

2. Verfahren zur Herstellung von teilhydrophobem Metalloxid nach Anspruch 1, **dadurch gekennzeichnet, dass** das Metalloxid pyrogen ist.

3. Verfahren zur Herstellung von teilhydrophobem Metalloxid nach Anspruch 1 oder 2, **dadurch gekennzeichnet, dass** das Metalloxid fluidisiert ist.

4. Verfahren zur Herstellung von teilhydrophobem Metalloxid nach einem oder mehreren der Ansprüche 1 - 3 , **dadurch gekennzeichnet, dass** das Metalloxid Kieselsäure ist.

5. Verfahren zur Herstellung von teilhydrophobem Metalloxid nach Anspruch 4, **dadurch gekennzeichnet, dass** das Metalloxid pyrogene Kieselsäure ist.

6. Verfahren zur Herstellung eines teilhydrophoben Metalloxids nach einem oder mehreren der Ansprüche 1 - 5, **dadurch gekennzeichnet, dass** die Reaktion sich aus den Schritten der (1) Beladung bei einer Temperatur von 20°C bis 120°C, der (2) Reaktion bei einer Temperatur von 50°C bis 330°C und der (3) Reinigung bei einer Temperatur von 290°C bis 340°C zusammensetzt.

7. Teilhydrophobe Kieselsäure, deren Partikel einen Kontaktwinkel θ in Luft gegen Wasser von kleiner 180° aufweisen, wobei die Dichte der Oberflächensilanolgruppen SiOH sich zwischen minimal 0,9 und maximal 1,7 SiOH pro $nm^2$ Partikeloberfläche bewegt und einen Kohlenstoffgehalt von 0,1 - 2,0 Gew.% aufweist sowie eine Methanolzahl von kleiner 30 aufweist.

8. Additiv zur Steuerung der Rheologie von flüssigen und pulverförmigen Systemen, **dadurch gekennzeichnet, dass** es eine Kieselsäure nach Anspruch 7 oder hergestellt nach einem der Ansprüche 1 - 6 enthält.

9. Toner oder Entwickler, **dadurch gekennzeichnet, dass** er eine Kieselsäure nach Anspruch 7 oder hergestellt nach einem der Ansprüche 1 - 6 enthält.

10. Emulsion, **dadurch gekennzeichnet, dass** sie eine Kieselsäure nach Anspruch 7 oder hergestellt nach einem der Ansprüche 1 - 6 enthält.

11. Emulsion nach Anspruch 10, **dadurch gekennzeichnet, dass** sie keinen Emulgator enthält.

**Revendications**

1. Procédé pour la préparation d'oxyde métallique partiellement hydrophobe, **caractérisé en ce que** l'oxyde métallique est silylé avec

I) un organosilane de formule

$$R^1{}_nSiX_{4-n}$$

où n = 1, 2 ou 3
ou des mélanges de ces organosilanes
où $R^1$ représente un radical hydrocarboné saturé, monoinsaturé ou polyinsaturé, monovalent, le cas échéant halogéné, comprenant 1 à 24 atomes de carbone et peut être identique ou différent et X = halogène, un radical azoté, $OR^2$, $OCOR^2$, $O(CH_2)_xOR^2$, où $R^2$ signifie hydrogène ou un radical hydrocarboné monovalent comprenant 1 à 12 atomes de carbone et x = 1, 2, 3
ou
II) un organosiloxane élaboré à partir d'unités de formule

$$(R^1_3SiO_{1/2}),$$

et/ou

$$(R^1_2SiO_{2/2}),$$

et/ou

$$(R^1SiO_{3/2})$$

où $R^1$ a la signification susmentionnée, le nombre de ces unités dans un organosiloxane étant d'au moins 2 et I et II étant utilisés seuls ou en des mélanges quelconques en une quantité totale de 0,015 mmole/g à 0,15 mmole/g par 100 $m^2$/g de surface BET de l'oxyde métallique utilisé (mesurée selon le procédé BET selon les normes DIN 66131 et 66132).

2. Procédé pour la préparation d'oxyde métallique partiellement hydrophobe selon la revendication 1, **caractérisé en ce que** l'oxyde métallique est pyrogène.

3. Procédé pour la préparation d'oxyde métallique partiellement hydrophobe selon la revendication 1 ou 2, **caractérisé en ce que** l'oxyde de métal est fluidisé.

4. Procédé pour la préparation d'oxyde métallique partiellement hydrophobe selon l'une ou plusieurs des revendications 1 - 3, **caractérisé en ce que** l'oxyde métallique est la silice.

5. Procédé pour la préparation d'oxyde métallique partiellement hydrophobe selon la revendication 4, **caractérisé en ce que** l'oxyde métallique est la silice pyrogène.

6. Procédé pour la préparation d'un oxyde métallique partiellement hydrophobe selon l'une ou plusieurs des revendications 1 - 5, **caractérisé en ce que** la réaction est composée des étapes (1) de chargement à une température de 20°C à 120°C, (2) de réaction à une température de 50°C à 330°C et (3) de purification à une température de 290°C à 340°C.

7. Silice partiellement hydrophobe dont les particules présentent un angle de contact θ dans l'air par rapport à l'eau inférieur à 180°, la densité des groupes silanol superficiels SiOH étant située entre au minimum 0,9 et au maximum 1,7 SiOH par $nm^2$ de surface de particule et qui présente une teneur en carbone de 0,1 - 2,0% en poids, ainsi qu'un indice de méthanol inférieur à 30.

8. Additif pour le contrôle de la rhéologie de systèmes liquides et sous forme de poudre, **caractérisé en ce qu'**il contient une silice selon la revendication 7 ou préparée selon l'une quelconque des revendications 1 - 6.

9. Toner ou agent de développement, **caractérisé en ce qu'**il contient une silice selon la revendication 7 ou préparée selon l'une quelconque des revendications 1 - 6.

10. Emulsion, **caractérisée en ce qu'**elle contient une silice selon la revendication 7 ou préparée selon l'une quelconque des revendications 1 - 6.

11. Emulsion selon la revendication 10, **caractérisée en ce qu'**elle ne contient pas d'émulsifiant.

**Claims**

1. Process for preparing partly hydrophobic metal oxide, **characterized in that** it comprises silylating said metal oxide with

I) organosilane of the formula

$$R^1_n SiX_{4-n}$$

where n is 1, 2 or 3
or mixtures of these organosilanes,
$R^1$ being a saturated or monounsaturated or polyunsaturated, monovalent, optionally halogenated hydrocarbon radical having 1 to 24 carbon atoms and being identical or different at each occurrence and X being halogen, nitrogen radical, $OR^2$, $OCOR^2$, $O(CH_2)_x OR^2$, $R^2$ being hydrogen or a monovalent hydrocarbon radical having 1 to 12 carbon atoms
and x being 1, 2 or 3
or
II) organosiloxane composed of units of the formula

$$(R^1_3 SiO_{1/2}),$$

and/or

$$(R^1_2 SiO_{2/2}),$$

and/or

$$(R^1 SiO_{3/2})$$

where $R^1$ is as defined above,
the number of these units in one organosiloxane being at least 2, and I and II being used alone or in any desired mixtures in a total amount of from 0.015 mmol/g to 0.15 mmol/g per 100 $m^2$/g of metal oxide BET surface area (measured by the BET method in accordance with DIN 66131 and 66132) used.

2. Process for preparing partly hydrophobic metal oxide according to Claim 1, **characterized in that** the metal oxide is pyrogenic.

3. Process for preparing partly hydrophobic metal oxide according to Claim 1 or 2, **characterized in that** the metal oxide is fluidized.

4. Process for preparing partly hydrophobic metal oxide according to one or more of Claims 1 - 3, **characterized in that** the metal oxide is silica.

5. Process for preparing partly hydrophobic metal oxide according to Claim 4, **characterized in that** the metal oxide is pyrogenic silica.

6. Process for preparing a partly hydrophobic metal oxide according to one or more of Claims 1 - 5, **characterized in that** the reaction comprises the steps of (1) loading at a temperature of 20°C to 120°C, (2) reacting at a temperature of 50°C to 330°C, and (3) purifying at a temperature of 290°C to 340°C.

7. Partly hydrophobic silica whose particles have a contact angle θ in air for water of less than 180°, the density of the surface silanol groups SiOH ranging between a minimum of 0.9 and a maximum of 1.7 SiOH per $nm^2$ particle surface area, and the particles having a carbon content of 0.1 - 2.0% by weight, and a methanol number of less than 30.

8. Additive for controlling the rheology of liquid and pulverulent systems, **characterized in that** it comprises a silica according to Claim 7 or prepared according to any of Claims 1 - 6.

9. Toner or developer **characterized in that** it comprises a silica according to Claim 7 or prepared according to any of Claims 1 - 6.

10. Emulsion **characterized in that** it comprises a silica according to Claim 7 or prepared according to any of Claims 1 - 6.

11. Emulsion according to Claim 10, **characterized in that** it comprises no emulsifier.

Füllhöhe

10mm

ca. 50 mm

Ib

**Fig. 1a**

Glasrohr

Pulver

Kleber

Sieb

**Fig. 1b**

Fig. 2